# EUROPEAN PATENT SPECIFICATION

(11) **EP 0 267 604 B1**
(45) Date of publication and mention of the grant of the patent: **19.10.1994**
(21) Application number: 87116692.2
(22) Date of filing: 12.11.1987
(51) Int. Cl.: A41F 9/00

(54) **Waistband interlining with thin edges and its ultrasonic formation**
Steifgewebestreifen für Taillenbänder, dessen dünne Kanten durch Ultra-Wellen hergestellt werden
Gros-grain pour ceinture pourvu de bords minces et sa réalisation par ultra-sons

(30) Priority: 13.11.1986 US 930708
(43) Date of publication of application: 18.05.1988
(73) Proprietor: QST Industries, Inc., Chicago, Ill 60606 (US)
(72) Inventor: Crawford, Warren, N., Lincolnwood, Ill. 60645 (US)
(74) Representative: Goodenough, Nigel

(56) References cited:
- EP-A- 0 164 236
- GB-A- 1 213 957
- US-A- 3 565 711
- US-A- 3 725 189

## Description

The invention is concerned with the production of waistband interlinings.

It is conventional to produce waistband interlinings by cutting strips of appropriate length from relatively wide, continuous lengths of woven or nonwoven material. The interlinings are suitably cut from fill width piece goods in the warp direction by cold shearing or by the use of a hot knife.

A disadvantage associated with this method of producing interlinings is that the cut edges of the fabric are rough. In the case of hot cutting a strip containing nylon or other thermoplastics material in the weft, or fill, the edges become even more rough and brittle. When such a strip is inserted wholly or partially around the garment waistband, the weft threads, normally monofilaments, tend to protrude through the waistband shell fabric and may cause irritation to the wearer. When the interlining is a strip woven on a narrow loom, the return bights of the weft, i.e. the selvedge, tend to break, with the same undesirable protrusion of points which may penetrate the shell waistband fabric, abrade the same, and cause irritation to the wearer.

These disadvantages are overcome to a considerable extent by the process described in U. K. Patent Specification 1,213,957, (and U.S. Patent 3,571,814) according to which a continuous bead is applied to each cut edge of the interlining. One method for applying the continuous bead described in Patent Specification 1,213,957 comprises continuously extruding a plastics composition onto the moving interlining strip. The continuous bead forms a finished edge which prevents the needle-like ends of the weft threads from penetrating or abrading the waistband shell fabric. This prevents the displacement of the weft threads. The material of the bead flows into the interstices of the interlining strip to unite the bead, warp, and fills into an integrated whole.

While the method of the above-mentioned Specification works well, the production of an interlining strip in accordance with that method from a full-width fabric involves two distinct operations, namely cutting the strip from the full width piece goods and then extruding the edge bead onto it. It is an object of the present invention to provide a method of producing a waistband interlining having a "smooth edge" wherein the cutting of the interlining strip and the provision of smooth edges thereon are carried out in a single operation.

EP-A-0164236 discloses a waistband interlining material comprising an elongated web of woven fabric having fill yarns of thermoplastic material and at least one of the elongated edges forming a fused, smooth mass formed from the ends of the fill yarns along the elongated edge and from not more than one of the warp yarns.

In its simplest form, the invention involves the melting of the fill yarns and the fusing or "smearing" of their molten ends into each other to form a continuous edge. Additionally, the molten fill ends may also fuse with one adjacent warp, at least in places. Preferably, the fill ends do not fuse with any warp threads.

In general terms, the waistband interlining material comprises an elongated web of resiliently, stiff woven or knitted fabric having at least about 1.18 fill yarns of thermoplastic material per mm (30 per inch) and no more than about 1.65 warp yarns of a high thermoplastic content per mm (42 per inch). That web of woven or knitted fill and warp yarns is coated with a finishing of a thermoplastic material, and at least one of the elongated edges forms a fused, smooth mass formed from the ends of the fill yarns along said elongated edge and from not more than one of said warp yarns.

The fabric of the waistband material incorporates a finishing on the woven or knitted warp and fill yarns. This finish typically takes the form of a thermoplastic material added, in a molten state, to the yarns and allowed to cool into a solid mass. An acrylic resin represents a convenient type of finish.

The finish on the fabric generally facilitates or even permits the formation of a fused, solid mass on the elongated edge of the web of fabric of the waistband material. This may result from the finish itself acting as a sort of adhesive to hold the yarns together during the fusion process to insure a solid continuum of thermoplastic material. Alternatively, the application of the finish may serve as a tempering process on the yarns to make them more amenable to the ultrasonic fusing process.

The elongated edges on the web then form a fused, smooth mass formed from the ends of the fill yarns along the elongated edge. The fused mass may include all or part of one of the warp yarns. In the preferred case, however, the edge will result from the fusion of only the ends of the fills and will not include any material from the warp yarns.

Limiting the involvement of the fused edge to one and preferably no warp yarns results in the utilization of a simpler manufacturing process and equipment. To involve more than one warp yarns requires additional energy to provide the required fused mass.

Further, involving one or no warp yarns produces a smaller, smooth edge which has a width no greater than that of the fabric itself. Furthermore, avoiding the involvement of a plurality of yarns results in the removal of less of the original woven fabric from the final product; less of it disappears by melting under the ultrasonic knife.

Additionally, avoiding the involvement of many yarns into the edge provides a less expensive manufacturing process. The material may move through the ultrasonic cutter faster. Further, removing less product permits the greater utilization of the original fabric.

Moreover, the resulting interlining, with the thin fused edge, appears less likely to crack since it has greater pliability. Further, it allows the interlining to better retain its shape from one edge to the other since the fusing has had less of an effect upon the fill yarns.

A waistband assembly will then include a shell fabric of a garment such as a pair of slacks having an inwardly folded edge. A resilient woven textile strip as described above sits positioned within the fold of the shell fabric.

The warp of the woven or knitted strip will have a high thermoplastic content and often includes no more than 1.65 yarns per mm (42 per mm (42 yarns per inch) and preferably 1.57 yarns per mm. (40 yarns per inch)**.** The warp may include 20.5 one hundred percent polyester spun yarn.

The fill, running transverse to the warps, includes relatively stiff thermoplastic monofilament yarns and at least one smooth edge which has a position adjacent to the fold in the shell fabric. The fill will typically display approximately 1.18, 1.30 or more picks per mm (30, 33 or more picks per inch). The fill may have a composition of polyester or of nylon.

The smooth edge of the textile strip results from the fusion of the fill ends and, occasionally, not more than one of the warps; most desirably, the edge will not involve any warp for the majority of its length. The resulting fused edge of the strip will appear smooth and should preclude the yarns of the fill from disengaging themselves along the smooth edge. The fusion most conveniently results from the ultrasonic cutting of the strip in the direction of the warp yarns.

The precise configuration of the continuous edge formed on the cut fabric is controlled by various factors. These include the speed of traverse of the material past the sonic unit, the shape of the pressing element, or knife, the amount of ultrasonic energy applied, and the degree of cooling, both to the horn and above and below the fabric beyond the pressing element.

The making of the waistband interlining involves first weaving a fabric having not more than 1.65 warp yarns per mm (42 per inch) and at least 1.18 fill yarns per mm (30 per inch). The fill yarns have a thermoplastic composition. The manufacturing then continues with the placement of a thermoplastic finishing on the woven or knitted fabric.

Lastly, the fabric undergoes an ultrasonic cutting along lines substantially parallel to the warp yarns. It should produce a fused edge from the ends of the fill yarns along the cuts and involve no more than one warp yarn.

A machine for producing waistband interlinings using the method of the invention suitably comprises one or a number of stationary pressing elements positioned above one or more horns connected to ultrasonic generators. The machine also comprises means for feeding the fabric between the pressing elements and horns, and means for drawing off cut fabric.

The machine is operated such that the molten thermoplastics material of the weft between each pressing element and associated horn forms a bead which "bridges" one monofilament in the weft to the next, and, on occasion, fuses also into the adjacent warp or wale.

Various shapes of pressing elements may be used, depending upon the precise configuration which is required for the continuous edge. Preferably the diameter of the edge will be no greater than the thickness of the fabric in order that no ridge will appear on the waistband shell fabric during garment wear.

The pressing elements are suitably made from steel and subjected to a hardening process. The horns of the ultrasonic generator is suitably manufactured from titanium and carbide-tipped steel.

### BRIEF DESCRIPTION OF THE FIGURES

Figure 1 is a cross-sectional elevation through an interlining strip of the invention, looking in the warp direction.

Figure 2 shows one form of apparatus for the production of interlining strips from a full-width fabric.

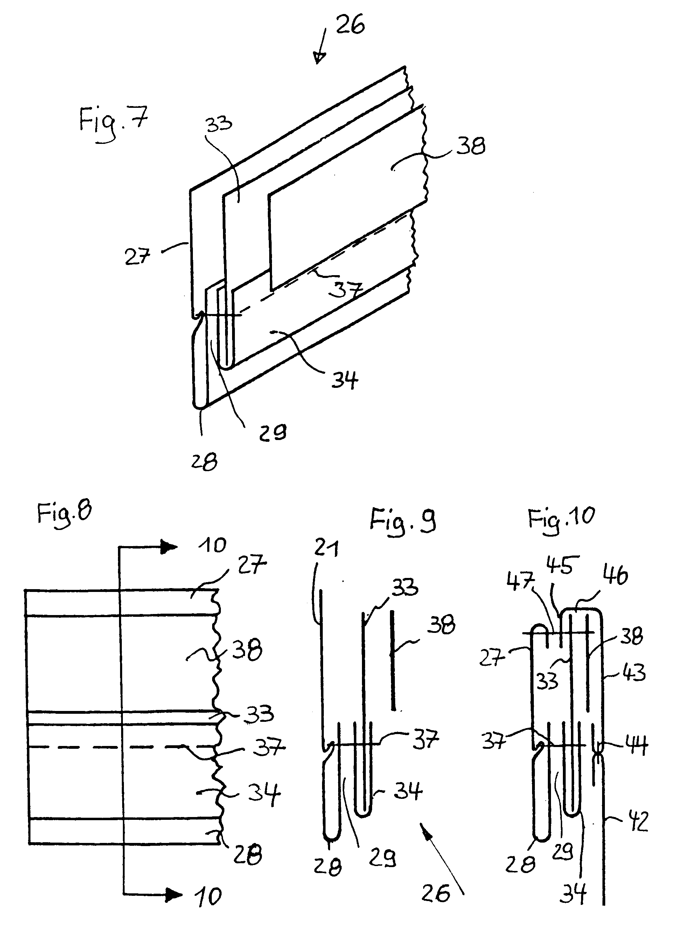

Figure 3 is a section on the line III-III of Figure 2.

Figure 4 shows part of Figure 3 on an enlarged scale.

Figure 5 shows one way of mounting the pressing elements, or knives.

Figure 6 shows a number of pressing element shapes.

Figure 7 gives a perspective view of a subassembly not yet attached to a shell fabric of a garment which utilizes a waistband interlining material with fused edges.

Figure 8 displays, in elevational view, the subassembly with the waistband material of Figure 7.

Figure 9 gives a cross-sectional view along the line 9-9 of the subassembly with the waistband material of Figure 8.

Figure 10 shows a waistband assembly including a shell fabric and incorporating the subassembly and waistband material of Figures 7 to 9.

### DETAILED DESCRIPTION

Referring to the drawings, an interlining fabric strip in accordance with the invention comprises the warp yarns 1 interwoven or knitted with the weft, or fill, yarns 2. The ends of the weft yarns 2 merge into the continuous edges 3.

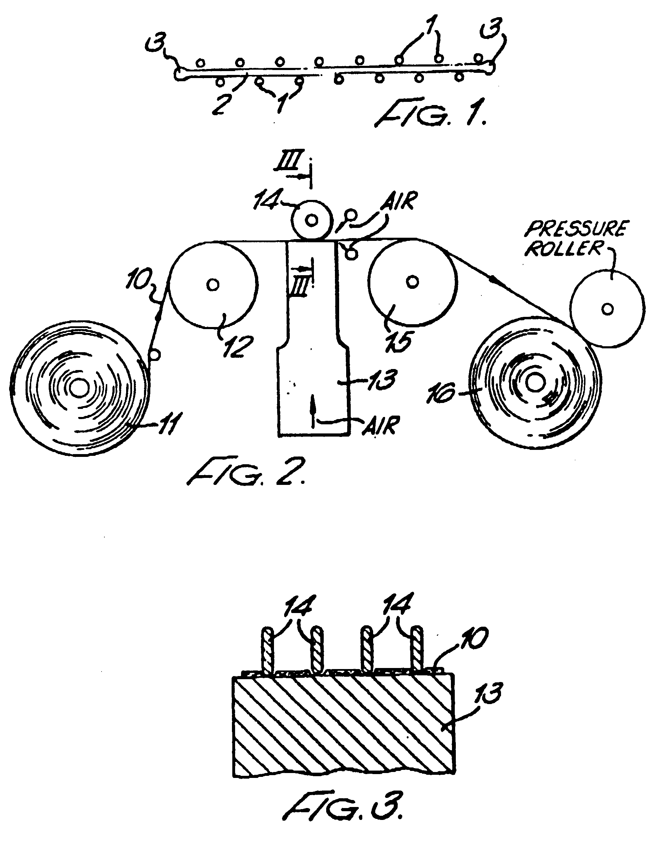

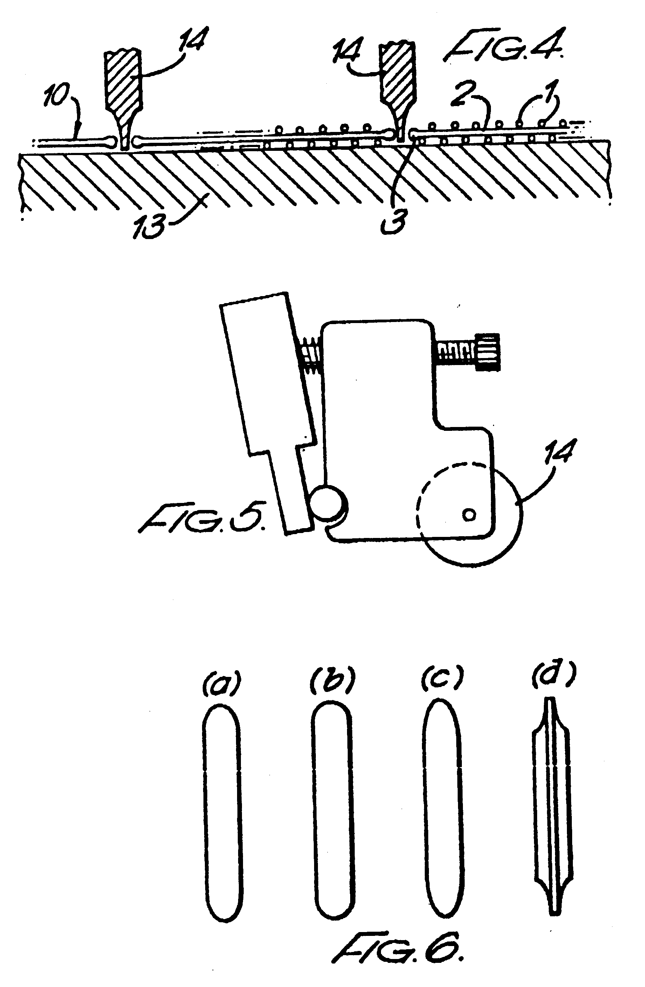

Referring to Figure 2, the fill-width fabric 10 is fed from the feed-roller 11 around the guide-roller 12 and over the horn 13 of an ultrasonic generator operating at a frequency between 20 and 200 kHz, preferably 20 kHz. As the fabric passes over the top of the horn 13, it is pressed by a series of pressing/cutting elements, or knives, 14 which cause the thermoplastic material of the fill yarns which they engage to soften and, by virtue of the fact that the fabric is moving, to "smear" or merge into the following fills.

Cooling air, if necessary, is applied to the horn 13 and to the fabric 10 as it emerges from between the horn 13 and the pressing/cutting elements 14, in order rapidly to cool the continuous cut and fused edges 3 of the interlining strips. The strips are thereafter passed over a guide-roller 15 and wrapped around the take-up roll 16. A suitable machine to accomplish this objective may be obtained from the Bramson Sonic Power Company of Danbury, Connecticut, model 187P. This machine may run at 20 percent of its 1500 watt power to give 300 watts to the horn. The horn then may accomodate seven knives across its 177.8 to 228.6 mm (7 to 9 inches). The actual amount of power may vary depending upon the width of the material and the actual number of knives but will generally fall in the range of 18 to 24 percent of the available power.

The operation of the pressing/cutting element 14 is best seen in Figure 4. The element 14, which, as shown, is in the form of a disc, is preferably pivotally mounted, as shown in Figure 5, in order to exert a uniform pressure on the fabric 10. Fine control is possible when the spring is under the control of a pneumatic cylinder. The element 14 may have any desired shape, which is dependent on the desired configuration of the continuous edge 3. A selection of typical element shapes is shown in Figure 6. The cutting element shown in Figure 6(d) is in the form of a hollow ground "blade". Typically, the pressing/cutting elements have "knife edges" of angle 75, 90, 120, or 140 degrees. A knife edge of 110 degrees having a flat spot on its bottom of 0.178 to 0.203 mm (0.007 to 0.008 inch) gives excellent results.

Typical operating speeds (i.e. feed and draw-off speeds) are 10m/minute for 400 denier woven fabric and 420 denier knitted fabric, and 16m/minute for 250 denier knitted fabric. A very pleasing waistband interlining results from the use of a fabric having polyester polyfilament yarns of a size 20.5/1 as the warp and either 750 Denier monofilament polyester or 520 Denier monofilament nylon as the fills. In either event, the material may have 1.57 warps per mm (40 per inch) and 1.30 fills per mm (30 per inch). Passing through the machine described above with the 110 degree knife, the material should travel at the rate of about 11m per minute (12 yards per minute).

The waistband subassembly shown generally at 26 in Figures 8 to 10 includes first the top 27 of the waistband which the consumer will see when he looks inside his garment. Formed from the same material and sitting below the top 27, the pleat 28 forms the recess 29 where the tops of pockets and the sewing of belt-tabs on the outside of the garment may occur. The pleat 28 serves to keep the interior of the garment attractive for the purchaser. The usual pocketing type of material functions well to form the top 27 and the pleat 28. In particular, it has a very acceptable feel to the touch.

The subassembly 26 of Figures 8 to 10 further includes the strip of canvas 33. The canvas 33 provides the top of the garment as well as the subassembly with additional body.

The sewing tab 34 covers the bottom of the canvas strip 33. Along with the strip 33, it serves as an attachment point for the tops of pockets on the inside of the garment and for belt loops sewn to the outside of the garment.

The row of stitching 37 then serves to keep the subassembly 26, with one exception, substantially intact. The strip of waistband interlining 38 represents the sole component of the subassembly 26 remaining unattached to the others at this point in the construction process.

The completion of the waistband requires its attachment to a shell fabric. The completed assembly appears generally at 41 in Figure 11. As seen there, the assembly at 41 includes the main body of the shell 42 which constitutes the vast majority of the garment visible to view. Additionally, the shell further includes the upper or edge portion 43 which encircles the wearer's waist. The line of stitching 44 attaches the two small sections together.

The very top 45 of the shell edge portion 43 folds over and towards the inside of the garment and covers the tops of the waistband interlining 38 and the canvas 33. Similarly, the top of the waistband 27 folds over to provide a smooth edge. The stitching 47 then serves to complete the construction of the waistband assembly 41 by passing through the top of the waistband twice, the folded over portion 46 of the upper shell section 43, the canvas 33, and the waistband interlining 38.

The waistband interlining material 38 represents a relatively stiff woven fabric sold widely throughout the United States and other countries under the trademark BANROL by Quick Service Textiles, Inc., of Chicago, Illinois. To form the fused edge, the waistband interlining material 38 should include fill yarns of a thermoplastic material. Typically, it will have a composition of a relatively stiff thermoplastic monofilament yarn. The fill yarns may have a composition of nylon or polyester as typical examples and, in particular, take the form of 750 Denier spun polyester monofilament. The fill will generally incorporate about 1.18 or more yarns per mm (30 per inch). Prefered is 1.30 yarns per mm (33 per inch).

The warp may possess a high thermoplastic content. In fact, the warp thread yarn may have a composition of only thermoplastic material. Polyester spun yarn represents a suitable choice for the warps. More specifically, the warp may include 15.5/1 one hundred percent polyester spun yarn. For 1.30 fills per mm (33 fills per inch), 20.5/1 is desirable.

The waistband interlining 38 should also include a finish applied to the warp and fill yarns. This finishing generally takes the form of a thermoplastic material applied to the yarns in the molten state and allowed to cool to hardness. In particular, an acrylic resin has proved to represent a desirable finish to the waistband interlining materials. A particularly desirable finish takes the form of an acrylic latex sold under the trademark Rophlex E693 by The Rohm & Hass Company in Philadelphia, Pennsylvania.

The thermoplastic finish seems to aid in the fusion of the ends of the fill yarns to form a solid edge as well as providing a more desired interlining material itself. It may accomplish this by effectuating a tempering of the yarns themselves because of the heat introduced by the application of the molten material to the yarns. Alternately, or even additionally, the finish may act as a sort of adhesive to help the fill ends fuse and form a solid mass and perhaps may contribute to that mass itself.

A smooth edge may result simply from the fusion of the ends of fill yarns by themselves. It may at times also incorporate in the fused mass no more than one warp yarn. Preferably the majority, if not all, of the fused edge includes no warps whatsoever.

By virtue of the method of this invention, it is possible to produce, in one operation, a waistband interlining strip having a flexible continuous thermoplastic edge which assists in the manufacture of garments and which provides protection against weft penetration of the waistband shell fabric throughout the life of the garment.

## Claims

1. A waistband interlining material (38) comprising an elongated web of resiliently stiff woven or knitted fabric (10) having at least about 1.18 fill yarns (2) of thermoplastic material per mm (30 per inch) and no more than about 1.65 warp (1) yarns per mm (42 per inch) of a high thermoplastic content, characterized in that said web of woven fill (2) and warp (1) yarns is coated with a finishing of a thermoplastic material, and at least one of the elongated edges (3) forms a fused, smooth mass formed from the ends of said fill yarns (2) along said elongated edge (3) and from not more than one of said warp yarns (1).

2. The material of claim 1 wherein said finishing is composed of an acrylic resin.

3. The material of claim 2 wherein said fabric includes no more than 1.57 warp yarns per mm (40 per inch).

4. The material of claim 3 wherein said fabric includes at least about 1.30 fill yarns (2) per mm (33 per inch).

5. A waistband assembly comprising:
A. an inwardly folded shell fabric (42,43) of a garment; and
B. a resilient, woven or knitted textile strip positioned within the fold of said shell fabric, said strip (38) comprising an elongated web of resiliently stiff woven fabric (10) having at least about 1.18 fill yarns (2) of thermoplastic material per mm (30 per inch) and no more than about 1.65 warp yarns (1) per mm (42 per inch) of a high thermoplastic content, characterized in that said web of woven fill (2) and warp (1) yarns is coated with a finishing of a thermoplastic material and at least one of the elongated edges (3) forms a fused, smooth mass formed from the ends of said fill yarns (2) along said one elongated edge (3) and from not more than one of said warp yarns (1).

6. The assembly of claim 5 wherein said finishing is composed of an acrylic resin.

7. The assembly of claim 6 wherein said fabric includes no more than 1.57 warp yarns per mm (40 per inch).

8. The assembly of claim 7 wherein said fabric includes about 1.30 fill yarns (2) per mm (33 per inch).

9. A method of making a waistband interlining (38) comprising:
A. weaving or knitting a fabric (10) having no more than 1.65 warp yarns (1) per mm (42 per inch) and at least 1.18 fill yarns (2) per mm (30 per inch), said fill yarns having a thermoplastic composition; and
B. ultrasonically cutting said fabric with said finishing along lines substantially parallel to said warp yarn (1) characterized in that after weaving or knitting said fabric (10) and before cutting said fabric (10), a thermoplastic finishing is placed on said fabric and after the ultrasonic cutting, a fused edge (3) is formed from the ends of said fill yarns (2) along the cuts (3) and no more than one of said warp yarns (1).

10. The method of claim 9 wherein the step of ultrasonically cutting said fabric is accomplished by passing said fabric through an ultrasonic cutter at the rate of about 11m (12 yards) per minute.

## Patentansprüche

1. Ein Steifgewebematerial für Taillenbänder (38), das ein längliches Band aus elastisch steif gewobenem oder gestricktem Stoff (10) umfaßt, der wenigstens ungefähr 1,18 Schußfäden (2) aus thermoplastischen Material pro mm (30 pro Zoll) und nicht mehr als ungefähr 1,65 Kettfäden (1) pro mm (42 pro Zoll) eines hohen, thermoplastischen Anteils hat, **dadurch gekennzeichne**t, daß das genannte Band aus gewobenem Schußgarn (2) und Kettgarn mit einer Zurichtung aus thermoplastischen Material beschichtet ist, und wenigstens einer der Längsränder (3) eine geschmolzene, glatte Masse bildet, die aus den Enden der genannten Schußgarnfäden (2) entlang dem genannten Längsrand (3) und aus nicht mehr als einem der genannten Kettgarnfäden (1) gebildet ist.

2. Das Material des Anspruchs 1, in dem die genannte Zurichtung aus einem Acrylharz gebildet ist.

3. Das Material des Anspruchs 2, in dem der genannte Stoff nicht mehr als 1,57 Kettgarnfäden pro mm (40 pro Zoll) enthält.

4. Das Material des Anspruchs 3, in dem der genannte Stoff wenigstens ungefähr 1,30 Schußgarnfäden (2) pro mm (33 pro Zoll) enthält.

5. Eine Taillenbandanordnung umfassend:
A. Einen nach innen gefalteten Hüllenstoff (42, 43) eines Kleidungsstücks; und
B. einen elastischen, gewebten oder gestrickten Textilstreifen, der innerhalb der Faltung des genannten Hüllenstoffs angeordnet ist, wobei der genannte Streifen (38) ein längliches Band aus elastisch steif gewobenem Stoff (10) umfaßt, das wenigstens ungefähr 1,18 Schußgarnfäden (2) aus thermoplastischen Material pro mm (30 pro Zoll) und nicht mehr als ungefähr 1,65 Kettgarnfäden (1) pro mm (42 pro Zoll) eines hohen, thermoplastischen Anteils hat, **dadurch gekennzeichnet**, daß das genannte Band aus gewobenem Schußgarn (2) und Kettgarn mit einer Zurichtung aus thermoplastischen Material beschichtet ist, und wenigstens einer der Längsränder (3) eine geschmolzene, glatte Masse bildet, die aus den Enden der genannten Schußgarnfäden (2) entlang dem genannten Längsrand (3) und aus nicht mehr als einem der genannten Kettgarnfäden (1) gebildet ist.

6. Die Anordnung des Anspruchs 5, in der die genannte Zurichtung aus einem Acrylharz gebildet ist.

7. Die Anordnung des Anspruchs 5, in der der genannte Stoff nicht mehr als 1,57 Kettgarnfäden pro mm (40 pro Zoll) enthält.

8. Die Anordnung des Anspruchs 5, in der der genannte Stoff wenigstens ungefähr 1,30 Schußgarnfäden (2) pro mm (33 pro Zoll) enthält.

9. Ein Verfahren zum Herstellen eines Steifgewebestreifens für Taillenbänder (38), umfassend:
A. Weben oder Stricken eines Stoffes (10) der nicht mehr 1,65 Kettgarnfäden (1) pro mm (42 pro Zoll) und wenigstens 1,18 Schußfäden (2) pro mm (30 pro Zoll) hat, wobei die genannten Schußgarnfäden eine thermoplastische Zusammensetzung haben; und
B. Schneiden des genannten Stoffes mit der genannten Zurichtung durch Ultraschall entlang von Linien, die im wesentlichen parallel zu den genannten Kettgarnfäden (1) verlaufen, **dadurch gekennzeichnet**, daß nach dem Weben oder Stricken des genannten Stoffes (10) und vor dem Schneiden des genannten Stoffes (10) eine thermoplastische Zurichtung auf dem genannten Stoff angeordnet wird und nach dem Ultraschallschneiden ein geschmolzener Rand (3) aus den Enden der genannten Schußgarnfäden (2) entlang der Schnitte (3) und aus nicht mehr als einem der genannten Kettgarnfäden (1) gebildet wird.

10. Das Verfahren des Anspruchs 9 bei dem der Schritt des Ultraschallschneidens des genannten Stoffes ausgeführt wird, indem der genannte Stoff durch eine Ultraschallschneideinrichtung mit der Geschwindigkeit von ungefähr 11 m (12 Yard) pro Minute hindurchbewegt wird.

## Revendications

1. Matériau de gros-grain de ceinture (38) comprenant une bande allongée d'étoffe (10), tissée ou en tricot, rigide de façon élastique possédant au moins environ 1,18 fils de trame (2) en matériau thermoplastique au mm (30 au pouce) et pas plus d'environ 1,65 fils de chaîne (1) au mm (42 au pouce) à teneur élevée en matériau thermoplastique, caractérisé en ce que ladite bande de fils tissés de trame (2) et de chaîne (1) est revêtue d'un apprêt en matériau thermoplastique et en ce qu'au moins un des bords allongés (3) forme une masse lisse fondue formée à partir des extrémités desdits fils de trame (2) le long dudit bord allongé (3) et à partir d'au plus un desdits fils de chaîne (1).

2. Matériau selon la revendication 1, dans lequel ledit apprêt est composé d'une résine acrylique.

3. Matériau selon la revendication 2, dans lequel ladite étoffe ne comprend pas plus de 1,57 fils de chaîne au mm (40 au pouce).

4. Matériau selon la revendication 3, dans lequel ladite étoffe comprend au moins environ 1,30 fils de trame (2) au mm (33 au pouce).

5. Assemblage de ceinture comprenant :
A. une étoffe d'enveloppe repliée vers l'intérieur (42, 43) d'un vêtement et
B. une bande de textile tissée ou en laine, élastique, placée à l'intérieur du pli de ladite étoffe d'enveloppe, ladite bande (38) comprenant une bande allongée d'étoffe (10) tissée, rigide de manière élastique, possédant au moins environ 1,18 fils de trame (2) en matériau thermoplastique au mm (30 au pouce) et pas plus d'environ 1,65 fils de chaîne (1) au mm (42 au pouce) à teneur élevée en matériau thermoplastique, caractérisé en ce que ladite bande de fils tissés de trame (2) et de chaîne (1) est revêtue d'un apprêt en matériau thermoplastique et en ce qu'au moins un des bords allongés (3) forme une masse lisse fondue formée à partir des extrémités desdits fils de trame (2) le long d'un bord allongé (3) et à partir d'au plus un desdits fils de chaîne (1).

6. Assemblage selon la revendication 5, dans lequel ledit apprêt est composé d'une résine acrylique.

7. Assemblage selon la revendication 6, dans lequel ladite étoffe ne comprend pas plus de 1,57 fils de chaîne au mm (40 au pouce).

8. Assemblage selon la revendication 7, dans lequel ladite étoffe comprend environ 1,30 fils de trame (2) au mm (33 au pouce).

9. Procédé de fabrication d'un gros-grain de ceinture (38) comprenant :
A. le tissage ou le tricotage d'une étoffe (10) ne possédant pas plus de 1,65 fils de chaîne (1) au mm (42 au pouce) et possédant au moins 1,18 fils de trame (2) au mm (30 au pouce), lesdits fils de trame ayant une composition thermoplastique et
B. la coupe par des ultrasons de ladite étoffe possédant ledit apprêt le long de lignes sensiblement parallèles audit fil de chaîne (1) caractérisé en ce que, après tissage ou tricotage de ladite étoffe (10) et avant la coupe de ladite étoffe (10) un apprêt en matériau thermoplastique est placé sur ladite étoffe et après la coupe par ultrasons, un bord fondu (3) est formé à partir des extrémités desdits fils de trame (2) le long des coupures (3) et à partir d'au plus un desdits fils de chaîne (1).

10. Procédé selon la revendication 9, dans lequel l'étape de coupe par ultrasons de ladite étoffe est réalisée en faisant passer ladite étoffe dans une machine à couper par ultrasons à la vitesse d'environ 11 m (12 yards) par minute.
